# EUROPÄISCHE PATENTSCHRIFT

(11) **EP 0 872 761 B1**
(45) Veröffentlichungstag und Bekanntmachung des Hinweises auf die Patenterteilung: **03.11.1999**
(21) Anmeldenummer: 98106547.7
(22) Anmeldetag: 09.04.1998
(51) Int. Cl.: G03C 1/04, B41M 5/00, C08L 57/04

(54) **Redispergierbare Pulverzusammensetzungen zur Herstellung von fotografischen Aufzeichnungsmaterialien**
Redispersible powder compositions for the production of photographic recording materials
Compositions redispersables en poudre pour la production de matériaux photographiques d'enregistrement

(30) Priorität: 18.04.1997 DE 19716350
(43) Veröffentlichungstag der Anmeldung: 21.10.1998
(73) Patentinhaber: Wacker-Chemie GmbH, 81737 München (DE)
(72) Erfinder: Kohlhammer, Klaus, Dr., 84533 Marktl (DE); Greiner, Wolfgang Roth, 79576 Weil am Rhein (DE); Figge, Reiner, Dr., 84539 Ampfing (DE); Haerzschel, Reinhard, Dr., 84489 Burghausen (DE)
(74) Vertreter: Schuderer, Michael, Dr.

(56) Entgegenhaltungen:
- AU-B- 443 427
- US-A- 2 739 137
- US-A- 2 856 371

## Beschreibung

Die Erfindung betrifft in Wasser redispergierbare, gebrauchsfertige Pulverzusammensetzungen zur Herstellung von fotografischen Aufzeichnungsmaterialien wie Fotopapieren, Fotofilmen oder Ink-Jet-Aufzeichnungsmaterialien.

Fotografische Aufzeichnungsmaterialien sind im allgemeinen aus einer oder mehreren Fotoemulsionsschichten aufgebaut, welche neben den lichtempfindlichen Silberhalogenidsalzen und weiteren fotoaktiven Agenzien wie Sensibilisatoren, Farbstoffe etc. als Bindemittel Gelatine und Polymerpartikel enthalten. Als Deckschicht zum Schutz der Fotoemulsionsschicht oder als Rückseitenbeschichtung des Trägermaterials werden häufig noch Beschichtungen aus einem Gemisch von Gelatine und Polymerpartikeln aufgetragen.

Die Herstellung derartiger fotografischer Aufzeichnungmaterialien ist beispielweise in der EP-A 613047, der DE-A 3150264 (US-A 4409322) und in der DE-A 3023112 (US-A 4294921) beschrieben. Man geht dabei von Gemischen aus wässriger Gelatinelösung und Polymeremulsion aus, denen gegebenenfalls noch lichtempfindliche Silberhalogenide und weitere Zusatzstoffe zugegeben werden. Zur Herstellung der Silberhalogenidbeschichtung wird in der Regel eine wässrige Gelatinelösung mit einer wässrigen Lösung eines Silbersalzes, beispielsweise Silbernitrat, und einer wässrigen Halogenidlösung, beispielsweise Kaliumhalogenid, vermischt. Die Polymeremulsion wird erst als letzter Rezepturbestandteil nach dem Ausfällen der Silbersalze zugegeben, um das Ausflocken der Polymerpartikel zu verhindern. Die einzelnen Schichten des fotografischen Aufzeichnungsmaterials werden dann in dem Fachmann bekannter Weise, beispielsweise mittels Vorhanggießen, Kaskadengießen oder Schlitzgießen, nacheinander auf das Trägermaterial aufgetragen.

Problematisch ist, daß die bisher zur Beschichtung eingesetzten wässrigen Gelatinelösungen und wässrigen Polymerdispersionen nur unbefriedigende Lagerstabilitäten aufweisen und vor allem gegenüber bakterieller Kontamination empfindlich sind. Ein weiteres Problem bestand in der mangelnden Elektrolytstabilität der wässrigen Polymerdispersionen.

Aus der DE-A 3417388 (Derwent-Abstract AN 85-069875) sind Dispersionspulver bekannt, welche durch Polymerisation in Gegenwart von wasserlöslichen Naturstoffen wie Gelatine und nachfolgender Trocknung unter Zugabe von Antiblockmittel zugänglich sind. Die Dispersionspulver werden für die Verwendung in Klebemitteln für die Textil-, Papier- und Bauindustrie empfohlen. Für die Verwendung in fotografischen Aufzeichnungsmaterialien sind diese Pulver ungeeignet, da bei der Polymerisation nur niedermolekulare, nicht gelierende Gelatine als Schutzkolloid eingesetzt werden kann.

Im Derwent-Abstract AN 90-259209 zur SU-A 1541223 werden Polymerpulver zur Verhinderung des Verdampfens leichtflüchtiger Flüssigkeiten beschrieben, welche durch Sprühtrocknung einer Dispersion von Polymer und Hohlkugeln aus Glas, Kieselgel oder Gelatine zugänglich sind.

Aus der EP-A 307855 sind wässrige Dispersionen von Polymerpartikeln bekannt, welche kovalent mit einer Gelatineschicht bedeckt sind, und als Mattierungsmittel in Fotobeschichtungen eingesetzt werden.

Die US-A 2856371 beschreibt Pulverzusammensetzungen aus Polymerpulver und Gelatine. Für die Verwendung in fotografischen Anwendungen sind diese Pulver wegen der fehlenden Elektrolytstabilität allerdings ungeeignet.

Es bestand somit die Aufgabe diese Ausgangsmaterialien in einer Form zur Verfügung zu stellen, welche die genannten Nachteile bezüglich Lagerstabilität nicht zeigt. Weiter sollte die Zubereitung der Ausgangsmaterialien eine ausreichende Stabilität gegenüber der Zugabe von anorganischen Elektrolytlösungen (Fotosalze) aufweisen.

Gegenstand der Erfindung sind gebrauchsfertige, in Wasser redispergierbare Pulverzusammensetzungen zur Herstellung von fotografischen Aufzeichnungsmaterialien oder Ink-Jet-Aufzeichnungsmaterialien, welche Gelatine und Polymerisate aus ethylenisch ungesättigten Monomeren mit einer Glasübergangstemperatur Tg von -60°C bis +120°C, mit einem Mischungsverhältnis von Polymerisat zu Gelatine von 0.1 : 99.9 bis 70 : 30 enhalten, dadurch gekennzeichnet, daß die Polymerisate nach dem Emulsionspolymerisationsverfahren, in Gegenwart von 0.5 bis 30 Gew% Emulgator, bezogen auf Monomermenge, hergestellt werden, wobei entweder
a) mindestens ein Emulgator mit ionischen und nichtionischen Gruppen zur Stabilisierung eingesetzt wird, oder
b) falls ausschließlich ionische Emulgatoren zu Stabilisierung eingesetzt werden, die Copolymerisation in Gegenwart von Comonomeren durchgeführt wird, aus der Gruppe umfassend Diacetonacrylamid und Comonomere, welche ein oder mehrere Substituenten aus der Gruppe -COOH, -OH, SO₃⁻, und -NCH₂OH enthalten.

Geeignete ethylenisch ungesättigte Monomere sind ein oder mehrere Monomere aus der Gruppe der Vinylester von Alkylcarbonsäuren mit 1 bis 12 C-Atomen, Ester der Acrylsäure oder Methacrylsäure von Alkoholen mit 1 bis 12 C-Atomen, Ethylen, Styrol und Vinylchlorid. In einer bevorzugten Ausführungsform, insbesonders bei der Herstellung in Gegenwart von ausschließlich ionischen Emulgatoren, enthalten die Polymerisate darüberhinaus noch Monomere mit funktionellen Gruppen wie -COOH, -OH, SO₃⁻, -NCH₂OH; sowie Diacetonacrylamid. Die funktionellen Comonomere sind im allgemeinen in einer Menge von 0.1 bis 10 Gew%, bezogen auf das Gesamtgewicht des Polymerisats, enthalten.

Die Monomerauswahl bzw. die Auswahl der Gewichtsanteile der Comonomere erfolgt dabei so, daß die Polymerisate eine Glasübergangstemperatur Tg von -60°C bis +120°C, vorzugsweise -35°C bis +100°C, aufweisen. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x₁/Tg₁ + x₂/Tg₂ + ... + xₙ/Tgₙ, wobei xₙ für den Massebruch (Gew%/100) des Monomers n steht, und Tgₙ die Glasübergangstemperatur in Grad Kelvin des Homopolymers des Monomer n ist. Tg-Werte für Homopolymerisate sind in Polymer Handbook 2nd Edition, J. Wiley & Sons, New York (1975) aufgeführt.

Bevorzugt werden Vinylacetat, Vinylester von alpha-verzweigten Monocarbonsäuren mit 9 bis 10 C-Atomen (VeoVa9^{R},Veova10^{R}), Acrylsäureester, Methacrylsäureester, Ethylen, Styrol und Vinylchlorid. Als funktionelle Comonomere werden Acrylsäure, Methacrylsäure, Hydroxyethylacrylat, Acrylamido-2-methylpropansulfonsäure, Styrolsulfonsäure, Acrylsäuresulfopropylester, N-Methylolacrylamid, Diacetonacrylamid bevorzugt.

Besonders bevorzugt werden Polymerisate von einem oder mehreren Monomeren aus der Gruppe Styrol, Butylacrylat, Methylmethacrylat, welche als funktionelle Comonomere ein oder mehrere aus der Gruppe Methacrylsäure, Hydroxyethylacrylat, Acrylamido-2-methylpropansulfonsäure und Diacetonacrylamid enthalten.

Die Herstellung der Polymerisate erfolgt nach dem Emulsionspolymerisationsverfahren in wässriger Phase bei Temperaturen zwischen 60°C und 90°C. Die Initiierung der Polymerisation erfolgt in bekannter Weise mittels der üblichen anorganischen oder organischen Peroxide, die zumindest teilweise wasserlöslich sind. Gegebenenfalls können reduzierende Agenzien zum Zwecke des katalytischen Peroxidzerfalls zugesetzt werden.

Die Polymerisation wird in Gegenwart von 0.5 bis 30 Gew%, vorzugsweise 0.5 bis 10 Gew% Emulgator, jeweils bezogen auf die Monomermenge, durchgeführt. Es wurde überraschenderweise gefunden, daß die Elektrolytstabilität einer Pulverzusammensetzung aus Polymerpulver und Gelatine wesentlich durch die Auswahl des Emulgators, welcher zur Herstellung des Polymers eingesetzt wird, beeinflußt wird.

Vorzugsweise wird in Gegenwart von Emulgatoren mit ionischen und nichtionischen Gruppen polymerisiert, wobei unter nichtionischen Gruppen hydrophile Gruppen, vorzugsweise Polyethylenoxid-Einheiten mit 3 bis 40 Mol Ethylenoxid, zu verstehen sind, und die ionischen Gruppen sowohl anionischer als auch kationischer Natur sein können. Es wurde nämlich gefunden, daß damit die Elektrolytstabilität der Redispersion, unabhängig von der Polymerzusammensetzung sichergestellt werden kann.

Beispiele für Emulgatoren mit anionischen und nichtionischen Gruppen sind ethoxylierte Alkylphenolsulfate, ethoxylierte Fettalkoholsulfonate, ethoxylierte Alkylphenolphosphate, ethoxylierte Fettalkoholesulfate, ethoxylierte Fettalkoholphosphate. Ein Beispiel für einen Emulgator mit kationischen und nichtionischen Gruppen ist N-Talgalkyl-N,N'-dimethyl-N,N'-polyethylenglycol-propylenbisammonium-bismethosulfat.

Falls nur ionische Emulgatoren zur Stabilisierung des Polymerisationsansatzes eingesetzt werden, muß die Emulsionspolymerisation in Gegenwart der genannten funktionellen Comonomere erfolgen. Beispiele für ionische Emulgatoren sind Alkali- und Ammoniumsalze von Alkylsulfaten, Alkali- und Ammoniumsalze von Alkylsulfonsäuren und von Alkylarylsulfonsäuren sowie alkylierte disulfonierte Diphenyloxidemulgatoren .

Schutzkolloide können gegebenenfalls in geringen Mengen von bis zu 5 Gew%, bezogen auf die Monomermenge als Dispergiermittel eingesetzt werden. Vorzugsweise wird ohne Zusatz von Schutzkolloid polymerisiert.

Das Emulsionspolymerisationsverfahren wird vorzugsweise nach dem Dosierverfahren durchgeführt, wobei zumindest ein Teil der Monomere während der Polymerisation zudosiert wird. Besonders bevorzugt wird eine Reaktionsführung, bei der ein Teil der Emulgatoren sowie ein Teil der Monomeren in wässriger Lösung oder Emulsion vorgelegt werden und der verbleibende Rest der Monomeren und Emulgatoren in Form einer Voremulsion nach dem Reaktionsstart zu dem Reaktionsgemisch zudosiert wird.

Nach Reaktionsende wird die Dispersion abgekühlt und der pH-Wert auf vorzugsweise 6.5 bis 7.0 eingestellt. Es resultieren Dispersionen mit einem Festgehalt von 30 bis 40 %. Die mittlere Teilchengröße der dispergierten Polymerteilchen beträgt < 500 nm, vorzugsweise < 200 nm, am meisten bevorzugt < 100 nm.

Als Gelatine können wasserlöslichen Proteine eingesetzt werden, welche durch Hydrolyse von tierischem Kollagen erhältlich sind. Wesentlich für die Fotoanwendung ist, daß die Gelatine gelierbar ist. Das mittlere Molekulargewicht Mw sollte daher mehr als 10000 g/mol betragen, vorzugsweise mehr als 100000 g/mol. Bevorzugt werden Gelatinen, die durch basische Hydrolyse von Ossein erhalten werden. Für fotografische Anwendungen besonders bevorzugt sind hochmolekulare (Mw > 100000 g/mol), gelierbare Gelatinen, die durch basische Hydrolyse von Rinderossein gewonnen werden und gegebenenfalls auch deionisiert sein können.

Zur Herstellung der redispergierbaren Pulverzusammensetzungen wird die Gelatine in heißem Wasser gelöst und eine wässrige Lösung mit einem Gelatinegehalt von vorzugsweise bis zu 25 Gew%, besonders bevorzugt 4 bis 15 Gew%, jeweils bezogen auf das Gesamtgewicht, hergestellt. Die Gelatinelösung wird vorgelegt und die wässrige Polymerdispersion zudosiert, wobei darauf zu achten ist, daß die Temperatur des Gemisches während der Zudosierung nicht unter den Gelpunkt absinkt, der üblicherweise zwischen 30°C und 40°C liegt. Gegebenenfalls kann der pH-Wert der Mischung auf den isoelektrischen Punkt der Gelatine eingestellt werden. Es können auch mit Gelatine verträgliche Schutzkolloide wie Polyvinylalkohole oder Dextrane zugegeben werden.

Die Trocknung der Mischung kann auf verschiedene Weise erfolgen:
Die wässrige Mischung kann sprühgetrocknet werden. Die Temperatur der Trockenluft kann dabei sowohl oberhalb als auch unterhalb der Glastemperatur des in der Mischung vorliegenden Polymers liegen.
Die Trocknung kann auch dadurch erfolgen, daß die wässrige Mischung unter den Gelpunkt der Gelatine abgekühlt wird, nach dem Gelieren durch Düsen gepreßt wird oder nach dem Nudelverfahren zerkleinert wird und mittels Bandtrocknung getrocknet wird.
Ein weitere Möglichkeit besteht darin, die wässrige Mischung zu einem Film zu gießen, zu trocknen und nach der Trocknung zu einem Pulver zu zerreiben.
Schließlich kann man die wässrige Mischung auch durch Gefriertrocknung trocknen.

Das Mischungsverhältnis (Gewichtsverhältnis) von Polymerisat zu Gelatine beträgt von 0.1 : 99.9 bis 70 : 30, vorzugsweise 5 : 95 bis 50 : 50.

Bei der Herstellung der fotografischen Aufzeichnungsmaterialien oder Ink-Jet-Aufzeichnungmaterialien wird die erfindungsgemäßen Pulverzusammensetzung in Wasser redispergiert. Gegebenenfalls können weitere in dieser Anwendung übliche Rezepturbestandteile wie Silberhalogenide, Gelatinehärter, oberflächenaktive Zusätze, Mattierungsmittel, Stabilisatoren, Sensibilisatoren zugegeben werden. Die Auftragung der Dispersion auf das Trägermaterial kann nach bekannten Verfahren mittels Vorhangbeschichtung, Kaskadengießen, Tauchbeschichtung, Luftmesser, Sprühen oder Extrusionsbeschichtung erfolgen. Geeignete Trägermaterialien sind dem Fachmann bekannt. Beispiele hierfür sind Papier, Polyesterfilme wie Polyethylenterephthalat-Filme oder Polypropylen.

Bevorzugt ist die Verwendung der Pulverzusammensetzungen als Bindemittel in lichtempfindlichen, silberhalogenidhaltigen Schichten auf opaken (Papier) oder transparenten (Polymerfilme) Schichtträgern. Bevorzugt ist auch die Verwendung der Pulverzusammensetzung als Bindemittel in Farbempfangsschichten von Ink-Jet-Papieren und Ink-Jet-Folien.

### Beispiele:

### Herstellung der in Beispiel 1 bis 4 eingesetzten Polymerdispersionen:

### Beispiel 1:

In einem Dosiergefäß wurden nacheinander 2.43 g Emulgator A, 13.9 g Emulgator B, 4.9 g Acrylamido-2-methylpropansulfonsäure (Na-Salz), 1.0 g Methacrylsäure, 200 g Styrol, 19.5 g Hydroxyethylacrylat, 200 g Methylmethacrylat und 68.2 g Butylacrylat in Wasser emulgiert. Außerdem wurden in einem zweiten Dosiergefäß 1.48 g Kaliumpersulfat in 49.7 ml Wasser gelöst und bereitgestellt.
Die Polymerisation wurde in einem 21-Laborautoklaven durchgeführt, dazu wurden 6.1 g Emulgator A in 104 ml Wasser gelöst und unter Rühren auf 75°C erwärmt. Nach dem Erreichen des Temperaturgleichgewichts wurden gleichzeitig die beiden vorbereiteten Dosierlösungen eingefahren und über einem Zeitraum von 4 h zudosiert. Nach dem Dosierende wurde die Reaktionstemperatur auf 85°C erhöht, um die Polymerisation zu vervollständigen. Durch Zugabe von wässriger NaOH wurde der pH-Wert auf ca. 6.8 eingestellt. Es resultierte eine Polymerdispersion mit folgenden charakteristischen Daten: Festgehalt 35.2%, Viskosität: 18.7 mPas, Teilchengröße: 60 nm, Glastemperatur: 78°C.

Die Emulgatoren und Monomeren wurden in den Beispielen 2 bis 4 entsprechend der nachstehenden Tabelle variiert:

**TABELLE**

| Beispiel | 1 | 2 | 3 | 4 |
|---|---|---|---|---|
| Emulgator A | 8.53 g | 30.3 g | - | - |
| Emulgator B | 13.9 g | - | - | 13.9 g |
| Emulgator C | - | - | 70.6 g | 81.8 g |
| Butylacrylat | 68.2 g | 286.0 g | 286.0 g | 302.0 g |
| Styrol | 200.0 g | - | 204.0 g | 200.0 g |
| MMA | 200.0 g | 204.0 g | - | 200.0 g |
| HEA | 19.5 g | 20.4 g | 20.4 g | 19.5 g |
| MAS | 1.0 g | 5.1 g | 5.1 g | 1.0 g |
| AMPS-Na | 4.87 g | 2.4 g | - | 4.87 g |
| | | | | |
| Festgehalt | 35.2% | 30.1 | 30.3% | 35.1% |
| Glastemperatur | 78°C | 10°C | 2°C | 6°C |
| Teilchengröße | 60 nm | 60 nm | 63 nm | 59 nm |
| Emulgator A = Alkylsulfat mit ca. 12 C-Atomen (Na-Salz); Emulgator B = Alkylphenol-(Ethylenoxid)-Sulfat (Na-Salz); Emulgator C = Alkylphenol-(Ethylenoxid)-Phosphat (Na-Salz); AMPS-Na = Acrylamido-2-methylpropansulfonsäure (Na-Salz); HEA = Hydroxyethylacrylat; MAS = Methacrylsäure; MMA = Methylmethacrylat | | | | |

Zum Beweis der vollständigen Redispergierbarkeit wurde die Teilchengröße jeweils nach dem Mischen der Dispersion mit der Gelatinelösung, d.h. vor dem Trocknungsprozeß, und nach dem Redispergieren der getrockneten Polymerzubereitung gemessen. Die Salzverträglichkeit der Redispersion wurde bestimmt, indem 100 ml der Redispersion (Festgehalt: 10 %) mit einer 10 %-igen CaCl₂-Lösung bis zum Auftreten von makroskopisch sichtbaren Koagulatanteilen titriert wurden.

### Beispiel 1:

Die Dispersion wurde mit einer 10 %-igen, wässrigen Gelatinelösung im Verhältnis von 50 : 50 (Polymer : Gelatine jeweils bezogen auf Trockengewicht) gemischt. Die Partikelgröße dieser Mischung betrug 126 nm und zeigte, daß sich eine Gelatineschicht um das Polymerteilchen herum gebildet hat. Die Lösung wurde bei 80°C Lufttemperatur zu einem rieselfähigen, nicht blockendem Pulver sprühgetrocknet. Nach dem Redispergieren dieses Pulvers in 50°C warmem Wasser betrug die Teilchengröße 136 nm; die Zusammensetzung war somit vollständig redispergiert. Die Salzverträglichkeit betrug 7.3 ml CaCl₂-Lösung (10 %). Die Redispersion war somit elektrolytstabil.

### Beispiel 2:

Die Dispersion wurde mit einer 10 %-igen, wässrigen Gelatinelösung im Verhältnis von 30 : 70 (Polymer : Gelatine jeweils bezogen auf Trockengewicht) gemischt. Die Partikelgröße dieser Mischung betrug 98 nm und zeigte, daß sich eine Gelatineschicht um das Polymerteilchen herum gebildet hat. Die Lösung wurde bei 80°C Lufttemperatur zu einem rieselfähigen, nicht blockendem Pulver sprühgetrocknet. Nach dem Redispergieren dieses Pulvers in 50°C warmem Wasser betrug die Teilchengröße 112 nm; die Zusammensetzung war somit vollständig redispergiert. Salzverträglichkeit: 12.9 ml CaCl₂-Lösung (10 %). Die Redispersion war somit elektrolytstabil.

### Beispiel 3:

Die Dispersion wurde mit einer 10 %-igen, wässrigen Gelatinelösung im Verhältnis von 30 : 70 (Polymer : Gelatine jeweils bezogen auf Trockengewicht) gemischt. Die Partikelgröße dieser Mischung betrug 126 nm und zeigte, daß sich eine Gelatineschicht um das Polymerteilchen herum gebildet hat. Die Lösung wurde bei 80°C Lufttemperatur zu einem rieselfähigen, nicht blockendem Pulver sprühgetrocknet. Nach dem Redispergieren dieses Pulvers in 50°C warmem Wasser betrug die Teilchengröße 136 nm; die Zusammensetzung war somit vollständig redispergiert. Salzverträglichkeit: 2.3 ml CaCl₂-Lösung (10 %). Die Redispersion war somit ausreichend elektrolytstabil.

### Beispiel 4:

Die Dispersion wurde mit einer 10 %-igen, wässrigen Gelatinelösung im Verhältnis von 50 : 50 (Polymer : Gelatine jeweils bezogen auf Trockengewicht) gemischt. Die Partikelgröße dieser Mischung betrug 105 nm und zeigte, daß sich eine Gelatineschicht um das Polymerteilchen herum gebildet hat. Die Lösung wurde bei 80°C Lufttemperatur zu einem rieselfähigen, nicht blockendem Pulver sprühgetrocknet. Nach dem Redispergieren dieses Pulvers in 50°C warmem Wasser betrug die Teilchengröße 116 nm; die Zusammensetzung war somit vollständig redispergiert. Salzverträglichkeit: 15.9 ml CaCl₂-Lösung (10 %). Die Redispersion war somit elektrolytstabil.

Die folgenden Beispiele illustrieren die Erfindung mit kommerziell erhältlichen Polymerdispersionen. Zum Beweis der vollständigen Redispergierbarkeit wurde die Teilchengröße jeweils nach dem Mischen der Dispersion mit der Gelatinelösung, d.h. vor dem Trocknungsprozeß, und nach dem Redispergieren der getrockneten Polymerzubereitung gemessen. Die Salzverträglichkeit der Redispersion wurde bestimmt, indem 100 ml der Redispersion (Festgehalt: 10 %) mit einer 10 %-igen CaCl₂-Lösung bis zum Auftreten von makroskopisch sichtbaren Koagulatanteilen titriert wurden.

### Beispiel 5:

Eine mit einem Emulgator mit anionischen und nichtionischen Gruppen stabilisierte Styrol-Butylacrylatdispersion (Vinnapas^{R} LL990 der Wacker Chemie GmbH) mit einer Glastemperatur von 80°C und einer Teilchengröße von ca. 60 nm (bestimmt mittels Coulter N4) wurde mit einer 10 %-igen, wässrigen Gelatinelösung im Verhältnis von 50 : 50 (Polymer : Gelatine jeweils bezogen auf Trockengewicht) gemischt. Die Partikelgröße dieser Mischung betrug 110 nm und zeigte, daß sich eine Gelatineschicht um das Polymerteilchen herum gebildet hat. Die Lösung wurde bei 80°C Lufttemperatur zu einem rieselfähigen, nicht blockendem Pulver sprühgetrocknet. Nach dem Redispergieren dieses Pulvers in 50°C warmem Wasser betrug die Teilchengröße 115 nm und bewies somit die vollständige Redispergierbarkeit dieses Polymeren. Die Salzverträglichkeit betrug 5.5 ml CaCl₂-Lösung (10 %). Die Redispersion war somit elektrolytstabil.

### Beispiel 6:

Eine mit einem Emulgator mit anionischen und nichtionischen Gruppen stabilisierte Acrylatdispersion (Vinnapas^{R} LL970 der Wacker Chemie GmbH) mit einer Glastemperatur von +10°C und einer Teilchengröße von ca. 65 nm (bestimmt mittels Coulter N4) wurde mit einer 10 %-igen, wässrigen Gelatinelösung im Verhältnis von 30 : 70 (Polymer : Gelatine jeweils bezogen auf Trockengewicht) gemischt. Die Partikelgröße dieser Mischung betrug 98 nm und zeigte, daß sich eine Gelatineschicht um das Polymerteilchen herum gebildet hat. Aus der Lösung wurde auf einer Polyethylenunterlage ein Film gegossen, der auf Raumtemperatur abgekühlt und anschließend getrocknet wurde. Nach dem vollständigen Trocknen über Nacht bei Raumtemperatur wurde der Film von seiner Unterlage abgelöst und bei 50°C in Wasser redispergiert. Die gemessene Teilchengröße betrug 106 nm; die Polymerzubereitung war somit vollständig redispergiert. Die Salzverträglichkeit war 14.0 ml CaCl₂-Lösung (10 %). Die Redispersion war somit elektrolytstabil.

### Beispiel 7:

Eine mit einem Emulgator mit anionischen und nichtionischen Gruppen stabilisierte Styrol-Butylacrylat-Dispersion (Vinnapas^{R} LL9400 der Wacker Chemie GmbH) mit einer Glastemperatur von +8°C und einer Teilchengröße von ca. 59 nm (bestimmt mittels Coulter N4) wurde mit einer 10 %-igen, wässrigen Gelatinelösung im Verhältnis von 30:70 (Polymer : Gelatine jeweils bezogen auf Trockengewicht) gemischt. Die Partikelgröße dieser Mischung betrug 103 nm und zeigte, daß sich eine Gelatineschicht um das Polymerteilchen herum gebildet hat. Aus der Lösung wurde auf einer Polyethylenunterlage ein Film gegossen, der auf Raumtemperatur abgekühlt und anschließend getrocknet wurde. Nach dem vollständigen Trocknen über Nacht bei Raumtemperatur wurde der Film von seiner Unterlage abgelöst und bei 50°C in Wasser redispergiert. Die gemessene Teilchengröße betrug 118 nm; die Zusammensetzung war somit vollständig redispergiert. Die Salzverträglichkeit betrug 16.8 ml CaCl₂-Lösung (10 %). Die Redispersion war somit elektrolytstabil.

### Vergleichsbeispiel 8:

Eine Polymerdispersion mit einem Feststoffgehalt von 20 Gew% wurde hergestellt durch Emulsionspolymerisation von 49 Teilen n-Butylacrylat, 21 Teilen Styrol und 30 Teilen Gelatine sowie Na-Laurylsulfat als anionischem Emulgator. Diese Dispersion wurde mit einer warmen, wässrigen Gelatinelösung gemischt, an der Luft getrocknet und in warmem Wasser redispergiert. Beim Zutropfen einer wässrigen CaCl₂-Lösung (10 %) wurde bereits nach dem zweiten Tropfen Koagulatbildung beobachtet. Die Redispersion war somit nicht elektrolytstabil.

## Patentansprüche

1. Gebrauchsfertige, in Wasser redispergierbare Pulverzusammensetzungen zur Herstellung von fotografischen Aufzeichnungsmaterialien oder Ink-Jet-Aufzeichnungsmaterialien, welche Gelatine und Polymerisate aus ethylenisch ungesättigten Monomeren mit einer Glasübergangstemperatur Tg von -60°C bis +120°C, mit einem Mischungsverhältnis von Polymerisat zu Gelatine von 0.1 : 99.9 bis 70 : 30, enthalten, dadurch gekennzeichnet, daß die Polymerisate nach dem Emulsionspolymerisationsverfahren, in Gegenwart von 0.5 bis 30 Gew% Emulgator, bezogen auf die Monomermenge, hergestellt werden, wobei entweder
a) mindestens ein Emulgator mit ionischen und nichtionischen Gruppen zur Stabilisierung eingesetzt wird oder
b) falls ausschließlich ionische Emulgatoren zur Stabilisierung eingesetzt werden, die Copolymerisation in Gegenwart von Comonomeren durchgeführt wird, aus der Gruppe umfassend Diacetonacrylamid und Comonomere, welche ein oder mehrere Substituenten aus der Gruppe -COOH, -OH, -SO₃⁻ und -NCH₂OH enthalten.

2. Redispergierbare Pulverzusammensetzungen zur Herstellung von fotografischen Aufzeichnungsmaterialien oder Ink-Jet-Aufzeichnungsmaterialien nach Anspruch 1, dadurch gekennzeichnet, daß Polymerisate von einem oder mehreren Monomeren aus der Gruppe Vinylester von Alkylcarbonsäuren mit 1 bis 12 C-Atomen, Ester der Acrylsäure oder Methacrylsäure von Alkoholen mit 1 bis 12 C-Atomen, Ethylen, Styrol und Vinylchlorid enthalten sind.

3. Redispergierbare Pulverzusammensetzungen zur Herstellung von fotografischen Aufzeichnungsmaterialien oder Ink-Jet-Aufzeichnungsmaterialien nach Anspruch 1, dadurch gekennzeichnet, daß Polymerisate von einem oder mehreren Monomeren aus der Gruppe Styrol, Butylacrylat, Methylmethacrylat, welche als funktionelle Comonomere ein oder mehrere aus der Gruppe Methacrylsäure, Hydroxyethylacrylat, Acrylamido-2-methylpropansulfonsäure und Diacetonacrylamid aufweisen, enthalten sind.

4. Redispergierbare Pulverzusammensetzungen zur Herstellung von fotografischen Aufzeichnungsmaterialien oder Ink-Jet-Aufzeichnungsmaterialien nach Anspruch 1 bis 3, dadurch gekennzeichnet, daß die Polymerisate in Gegenwart mindestens eines Emulgators mit ionischen und nichtionischen Gruppen hergestellt werden.

5. Redispergierbare Pulverzusammensetzungen zur Herstellung von fotografischen Aufzeichnungsmaterialien oder Ink-Jet-Aufzeichnungsmaterialien nach Anspruch 1 bis 3, dadurch gekennzeichnet, daß die Polymerisate in Gegenwart von ausschließlich anionischen oder kationischen Emulgatoren und in Gegenwart von Comonomeren, aus der Gruppe umfassend Diacetonacrylamid und Comonomere, welche ein oder mehrere Substituenten aus der Gruppe -COOH, -OH, SO₃⁻ und -NCH₂OH enthalten, hergestellt werden.

6. Redispergierbare Pulverzusammensetzungen zur Herstellung von fotografischen Aufzeichnungsmaterialien oder Ink-Jet-Aufzeichnungsmaterialien nach Anspruch 1 bis 5, dadurch gekennzeichnet, daß gelierbare Gelatinen mit einem mittleren Molekulargewicht Mw > 10000 g/mol, die durch basische Hydrolyse von Rinderossein gewonnen werden, enthalten sind.

7. Redispergierbare Pulverzusammensetzungen zur Herstellung von fotografischen Aufzeichnungsmaterialien oder Ink-Jet-Aufzeichnungsmaterialien Anspruch 1 bis 6, dadurch gekennzeichnet, daß das Mischungsverhältnis von Polymerisat zu Gelatine in der in Wasser redispergierbaren Pulverzusammensetzung von 5 : 95 bis 50 : 50 beträgt.

8. Verwendung der redispergierbaren Pulverzusammensetzungen gemäß Anspruch 1 bis 7 als Bindemittel in fotografischen Aufzeichnungsmaterialien oder Ink-Jet-Aufzeichnungsmaterialien.

9. Verwendung gemäß Anspruch 8, dadurch gekennzeichnet, daß die redispergierbaren Pulverzusammensetzungen als Bindemittel in lichtempfindlichen, silberhalogenidhaltigen Schichten auf opaken oder transparenten Schichtträgern eingesetzt werden.

10. Verwendung gemäß Anspruch 8, dadurch gekennzeichnet, daß die redispergierbaren Pulverzusammensetzungen als Bindemittel in Farbempfangsschichten von Ink-Jet-Papieren und Ink-Jet-Folieneingesetzt werden.

## Claims

1. Ready-to-use, water-redispersible powder compositions for preparing photographic recording materials or inkjet recording materials, which comprise gelatine and polymers made from ethylenically unsaturated monomers having a glass transition temperature Tg of from -60 to +120°C and having a mixing ratio of polymer to gelatine of from 0.1 : 99.9 to 70 : 30, characterized in that the polymers are prepared by emulsion polymerization in the presence of from 0.5 to 30% by weight of emulsifier, based on the amount of monomers, where either
a) at least one emulsifier with ionic and nonionic groups is used for stabilization, or
b) if exclusively ionic emulsifiers are used for stabilization, the copolymerization is carried out in the presence of comonomers selected from the group comprising diacetone acrylamide and comonomers which contain one or more substituents selected from the class consisting of -COOH, -OH, SO₃⁻ and -NCH₂OH.

2. Redispersible powder compositions for preparing photographic recording materials or inkjet recording materials according to Claim 1, characterized in that the composition contains polymers of one or more monomers selected from the class consisting of vinyl esters of alkylcarboxylic acids having from 1 to 12 carbon atoms, acrylates or methacrylates of alcohols having from 1 to 12 carbon atoms, ethylene, styrene and vinyl chloride.

3. Redispersible powder compositions for preparing photographic recording materials or inkjet recording materials according to Claim 1, characterized in that the composition contains polymers of one or more monomers selected from the class consisting of styrene, butyl acrylate and methyl methacrylate and the polymers have, as functional comonomers, one or more comonomers selected from the class consisting of methacrylic acid, hydroxyethyl acrylate, acrylamido-2-methylpropanesulphonic acid and diacetoneacrylamide.

4. Redispersible powder compositions for preparing photographic recording materials or inkjet recording materials according to Claims 1 to 3, characterized in that the polymers are prepared in the presence of at least one emulsifier with ionic and nonionic groups.

5. Redispersible powder compositions for preparing photographic recording materials or inkjet recording materials according to Claims 1 to 3, characterized in that the polymers are prepared in the presence of exclusively anionic or cationic emulsifiers and in the presence of comonomers selected from the group comprising diacetone acrylamide and comonomers which contain one or more substituents selected from the class consisting of -COOH, -OH, SO₃⁻ and -NCH₂OH.

6. Redispersible powder compositions for preparing photographic recording materials or inkjet recording materials according to Claims 1 to 5, characterized in that the composition contains gellable gelatins which are obtained by basic hydrolysis of bovine ossein and have an average molecular weight Mw > 10,000 g/mol.

7. Redispersible powder compositions for preparing photographic recording materials or inkjet recording materials according to Claims 1 to 6, characterized in that the mixing ratio of polymer to gelatin in the water-redispersible powder composition is from 5 : 95 to 50 : 50.

8. Use of the redispersible powder compositions according to Claims 1 to 7 as binders in photographic recording materials or in inkjet recording materials.

9. Use according to Claim 8, characterized in that the redispersible powder compositions are used as binders in light-sensitive, silver-halide-containing layers on opaque or transparent bases.

10. Use according to Claim 8, characterized in that the redispersible powder compositions are used as binders in colour-receptive layers of inkjet papers and inkjet films.

## Revendications

1. Compositions en poudre redispersables dans l'eau, prêtes à l'emploi, pour préparer des matériaux photographiques d'enregistrement ou des matériaux d'enregistrement à jet d'encre, qui contiennent de la gélatine et des polymères de monomères éthyléniquement insaturés ayant une température de transition vitreuse Tᵥ de -60°C à +120°C, avec un rapport de mélange de polymère à gélatine de 0,1:99,9 à 70:30, caractérisées en ce que les polymères sont préparés par le procédé de polymérisation en émulsion en présence de 0,5 à 30% en poids d'un émulsionnant, par rapport à la quantité de monomère, où soit :
a) au moins un émulsionnant ayant des groupements ioniques et non ioniques est utilisé pour la stabilisation, soit
b) si l'on utilise exclusivement des émulsionnants ioniques pour la stabilisation, la copolymérisation est effectuée en présence de comonomères du groupe comprenant un diacétoneacrylamide et des comonomères, lesquels contiennent un ou plusieurs substituants parmi le groupe -COOH, -OH, -SO₃⁻ et -NCH₂OH.

2. Compositions en poudre redispersables pour préparer des matériaux photographiques d'enregistrement ou des matériaux d'enregistrement à jet d'encre selon la revendication 1, caractérisées en ce que sont contenus des polymères d'un ou plusieurs monomères parmi le groupe des esters vinyliques d'acides alkylcarboxyliques ayant 1 à 12 atomes de carbone, des esters de l'acide acrylique ou méthacrylique d'alcools ayant 1 à 12 atomes de carbone, de l'éthylène, du styrène et du chlorure de vinyle.

3. Compositions en poudre redispersables pour préparer des matériaux photographiques d'enregistrement ou des matériaux d'enregistrement à jet d'encre selon la revendication 1, caractérisées en ce que sont contenus des polymères d'un ou plusieurs monomères parmi le groupe du styrène, de l'acrylate de butyle, du méthacrylate de méthyle, lesquels présentent, comme comonomères fonctionnels, un ou plusieurs parmi le groupe de l'acide méthacrylique, de l'acrylate d'hydroxyéthyle, de l'acide acrylamido-2-méthylpropanesulfonique et du diacétoneacrylamide.

4. Compositions en poudre redispersables pour préparer des matériaux photographiques d'enregistrement ou des matériaux d'enregistrement à jet d'encre selon les revendications 1 à 3, caractérisées en ce que les polymères sont préparés en présence d'au moins un émulsionnant ayant des groupements ioniques et non ioniques.

5. Compositions en poudre redispersables pour préparer des matériaux photographiques d'enregistrement ou des matériaux d'enregistrement à jet d'encre selon les revendications 1 à 3, caractérisées en ce que les polymères sont préparés en présence d'émulsionnants exclusivement anioniques ou cationiques et en présence de comonomères du groupe comprenant le diacétoneacrylamide et des comonomères, lesquels contiennent un ou plusieurs substituants parmi le groupe -COOH, -OH, SO₃⁻ et -NCH₂OH.

6. Compositions en poudre redispersables pour préparer des matériaux photographiques d'enregistrement ou des matériaux d'enregistrement à jet d'encre selon les revendications 1 à 5, caractérisées en ce que sont contenues des gélatines gélifiables ayant un poids moléculaire moyen Mw > 10 000 g/mole, qui sont obtenues par hydrolyse basique d'osséine bovine.

7. Compositions en poudre redispersables pour préparer des matériaux photographiques d'enregistrement ou des matériaux d'enregistrement à jet d'encre selon les revendications 1 à 6, caractérisées en ce que le rapport de mélange de polymère à gélatine dans la composition en poudre, redispersable dans l'eau vaut de 5:95 à 50:50.

8. Utilisation des compositions en poudre redispersables selon les revendications 1 à 7 comme liants dans des matériaux photographiques d'enregistrement ou dans des matériaux d'enregistrement à jet d'encre.

9. Utilisation selon la revendication 8, caractérisée en ce que les compositions en poudre redispersables sont utilisées comme liants dans des couches photosensibles contenant un halogénure d'argent sur des supports de couche opaques ou transparents.

10. Utilisation selon la revendication 8, caractérisée en ce que les compositions en poudre redispersables sont utilisées comme liants dans des couches réceptrices de couleur dans des papiers pour jet d'encre et dans des feuilles pour jet d'encre.
